# EUROPÄISCHE PATENTSCHRIFT

(11) **EP 2 307 213 B1**
(45) Veröffentlichungstag und Bekanntmachung des Hinweises auf die Patenterteilung: **12.12.2012**
(21) Anmeldenummer: 09779553.8
(22) Anmeldetag: 27.05.2009
(51) Int. Cl.: B60G 17/0195, B60Q 1/10, B60R 11/04, B60Q 1/00, G01C 21/16, G01C 9/06, B60G 17/019, B60Q 1/115

(54) **VERFAHREN ZUR NEIGUNGSBESTIMMUNG EINER KAROSSERIE EINES KRAFTFAHRZEUGS SOWIE VORRICHTUNG ZUR NEIGUNGSBESTIMMUNG**
METHOD FOR DETERMINING AN INCLINATION OF A BODY OF A MOTOR VEHICLE, AND DEVICE FOR DETERMINING AN INCLINATION
PROCÉDÉ DE DÉTERMINATION DE L INCLINAISON D UNE CARROSSERIE D UN VÉHICULE AUTOMOBILE ET DISPOSITIF DE DÉTERMINATION DE L INCLINAISON

(30) Priorität: 24.07.2008 DE 102008040684
(43) Veröffentlichungstag der Anmeldung: 13.04.2011
(73) Patentinhaber: Robert Bosch GmbH, 70442 Stuttgart (DE)
(72) Erfinder: KLIER, Willy, Farmington Hills, MI 48331 (US); BLANKENHORN, Ulrich, 71723 Grossbottwar (DE); RAJAPAKSE PATHIRAGE, Marco, 71404 Korb (DE); SCHULZ, Andreas, 70184 Stuttgart (DE); REIM, Andreas, 70839 Gerlingen (DE); STEINBACH, Alexander, 70191 Stuttgart (DE)
(86) Internationale Anmeldenummer: PCT/EP2009/056414
(87) Internationale Veröffentlichungsnummer: WO 2010/009928

(56) Entgegenhaltungen:
- WO-A-03/040652
- WO-A-2005/075246
- DE-A1- 19 744 084
- DE-A1-102004 045 268
- FR-A- 2 915 283
- US-A- 4 833 573

## Beschreibung

Die Erfindung betrifft ein Verfahren zur Neigungsbestimmung einer Karosserie eines Kraftfahrzeugs, wobei das Kraftfahrzeug seinen Rädern zugeordnete Radsensoren aufweist.

### Stand der Technik

Verfahren zur Neigungsbestimmung einer Karosserie eines Kraftfahrzeugs sind aus dem Stand der Technik bekannt. Beispielsweise ist in der DE 197 20 314 A1 eine Einrichtung zur Regelung einer Leuchtweite von Scheinwerfern von Fahrzeugen beschrieben. Zu diesem Zweck sind Neigungssensoren an einem Fahrzeugaufbau und an Aufhängungsteilen einer Vorderachse und einer Hinterachse vorgesehen. Diese Neigungssensoren sind mit einer Auswerteeinrichtung verbunden, die die Signale der Neigungssensoren auswertet und daraus die Neigung des Fahrzeugs ermittelt. Nachteilig ist hierbei, dass eine Reihe von Sensoren benötigt wird, die ausschließlich der Bestimmung der Neigung dienen und nicht für andere Zwecke eingesetzt werden können.

Aus der WO 03/040652 A1 sind weiterhin ein Verfahren sowie eine Vorrichtung zum Bestimmen der Neigung eines Kraftfahrzeugs bekannt, bei welchen eine Inertialsensorik vorgesehen ist, um beispielsweise die Lenkbeschleunigung des Fahrzeugs zu erfassen, wobei zur Bestimmung der Neigung außerdem eine Geschwindigkeitsmesseinrichtung vorgesehen ist.

Ferner ist aus der DE 10 2004 045 268 A1 eine Vorrichtung zur Ermittlung von Steuersignalen zur Ansteuerung eines Scheinwerfers eines Kraftfahrzeugs bekannt, wobei ein Drehratensensor zur Erfassung eines Karosserienickwinkels zwischen einer Fahrzeuglängsachse und einer Lotrechten in Richtung des Erdmittelpunkts vorgesehen ist. Weiterhin sind aus de gattungsbildenden WO 2005/075246 A1 ein Verfahren und eine Vorrichtung zur Leuchtweitenregulierung bei einem Kraftfahrzeug bekannt, mit einem der Karosserie zugeordneten Drehratensensor sowie mit einem Sensor zur Erfassung der Fahrzeuggeschwindigkeit auf Basis der Raddrehzahl.

### Offenbarung der Erfindung

Demgegenüber weist das Verfahren zur Neigungsbestimmung mit den in Anspruch 1 genannten Merkmalen den Vorteil auf, dass zum Einen die Genauigkeit der Neigungsbestimmung erhöht ist und zum Anderen bereits an dem Kraftfahrzeug vorhandene Sensoren verwendet werden können beziehungsweise die Sensoren auch für andere Zwecke eingesetzt werden können. Dies wird erreicht, indem eine Inertialsensorik zur Bestimmung von Beschleunigung und Drehrate einer Karosserie des Fahrzeugs vorgesehen ist, und aus von den Radsensoren gemessenen Werten und der Beschleunigung und/oder der Drehrate eine Neigung der Karosserie in Bezug zu einem mit den Rädern des Kraftfahrzeugs in Kontakt stehenden Untergrund bestimmt wird. Zusätzlich zu den Radsensoren ist also eine Inertialsensorik vorhanden. Die Inertialsensorik beruht auf dem Prinzip der Trägheitsnavigation. Das bedeutet, dass mit Hilfe der Inertialsensorik insbesondere Beschleunigungen und Drehraten gemessen werden können. Dabei kann die Sensorik mechanisch, beispielsweise mit einem oder mehreren Kreiseln, oder elektronisch, beispielsweise in Form eines Laser-Gyroskops, ausgeführt sein. Die Inertialsensorik kann über eine Auswerteschaltung verfügen, die direkt die Beschleunigung und/oder Drehrate der Karosserie des Kraftfahrzeugs zur Verfügung stellt. Aus der Beschleunigung und/oder der Drehrate und den von den Radsensoren gemessenen Werten kann eine Neigung der Karosserie in Bezug zu dem Untergrund bestimmt werden. Die Bestimmung der Beschleunigung und/oder der Drehrate mittels der Inertialsensorik ergibt äußerst genaue Werte für diese Größen, sodass auch die Neigung der Karosserie mit hoher Genauigkeit bestimmt werden kann. Teilweise ist an Bord des Kraftfahrzeugs bereits eine Inertialsensorik vorgesehen, da diese auch für andere Einsatzzwecke benötigt wird. In diesem Fall können Beschleunigung und/oder Drehrate der vorhandenen Inertialsensorik ausgewertet werden um die Neigung der Karosserie zu bestimmen. Damit entfällt die Notwendigkeit, weitere Sensoren an dem Kraftfahrzeug vorzusehen. Das erfindungsgemäße Verfahren zur Neigungsbestimmung weist also eine erhöhte Genauigkeit auf. Zusätzlich kann die Anzahl der an Bord des Kraftfahrzeugs vorhandenen Sensoren reduziert werden.

Die Erfindung sieht außerdem vor, dass mittels der Radsensoren eine Radbeschleunigung und/oder eine Radauslenkung erfasst wird/werden. Es kann vorgesehen sein, dass zwei Radsensoren an dem Kraftfahrzeug angeordnet sind. Dabei kann beispielsweise einer der Radsensoren den Vorderrädern und ein weiterer Radsensor den Hinterrädern zugeordnet sein. Prinzipiell ist eine beliebige Anzahl Radsensoren möglich. Bevorzugt ist eine Konfiguration, in der jedem Rad des Kraftfahrzeugs ein Radsensor zugeordnet ist. Auf diese Weise kann die Radbeschleunigung, insbesondere in Richtung einer Hochachse des Kraftfahrzeugs, mittels der Radsensoren erfasst werden. Es ist auch möglich, dass die Radsensoren eine Radbeschleunigung messen und aus dieser im Anschluss eine Radauslenkung bestimmt beziehungsweise geschätzt wird, beispielsweise durch Integration. Aus der Radbeschleunigung und der von der Inertialsensorik bestimmten Beschleunigung und/oder Drehrate kann die Neigung der Karosserie mit hoher Genauigkeit bestimmt werden, insbesondere wenn jedem Rad ein Radsensor zugeordnet ist.

Die Erfindung sieht weiterhin vor, dass die Inertialsensorik Beschleunigung aₓ, ay, a_{z} und Drehrate wₓ, wy, w_{z} für alle drei Raumrichtungen bestimmt. Grundsätzlich ist es mit Hilfe einer Inertialsensorik möglich, Beschleunigung und/oder Drehrate in mindestens einer Raumrichtung zu bestimmen. Um eine möglichst hohe Genauigkeit der Neigungsbestimmung zu ermöglichen, sollen Beschleunigung und Drehrate für alle drei Raumrichtungen ermittelt werden. Dabei bezeichnet aₓ eine Beschleunigung in Richtung einer Längsachse des Kraftfahrzeugs, a_{y} eine Beschleunigung in lateraler Richtung, das heißt, in Richtung einer Querachse des Kraftfahrzeugs, und a_{z} eine Beschleunigung in Richtung einer Hochachse des Kraftfahrzeugs. Dementsprechend bezeichnet ωₓ eine Drehrate um die Längsachse des Kraftfahrzeugs, w_{y} eine Drehrate um die Querachse des Kraftfahrzeugs und w_{z} eine Drehrate um die Hochachse des Kraftfahrzeugs.

Eine Weiterbildung der Erfindung sieht vor, dass die Inertialsensorik zumindest fünf der Größen aₓ, a_{y}, a_{z}, jeweils der Beschleunigung, und ωₓ, ω_{y}, ω_{z}, jeweils der Drehrate, bestimmt, wobei eine verbleibende Größe mittels eines Modells aus den bestimmten Größen und/oder zumindest einem der Werte der Radsensoren berechnet wird. Es ist also möglich, dass die Inertialsensorik Beschleunigung und Drehrate nicht in allen Raumrichtungen bestimmt. Es kann vielmehr vorgesehen sein, dass lediglich fünf der Größen aₓ, a_{y}, a_{z} und ωₓ, ω_{y}, ω_{z} mittels der Inertialsensorik bestimmt werden. In diesem Fall kann die verbleibende Größe mittels eines Modells berechnet beziehungsweise geschätzt werden. Dabei können auch von den Radsensoren gemessene Werte herangezogen werden. Es ist also möglich, eine einfachere Ausführung der Inertialsensorik vorzusehen und von dieser nicht bestimmte Größen aufgrund von den bestimmten Größen und/oder von Werten der Radsensoren und/oder von weiteren Sensoren des Kraftfahrzeugs gemessenen Werten zu bestimmen.

Eine Weiterbildung der Erfindung sieht vor, dass die Neigung um eine Querachse der Karosserie bestimmt wird. Das bedeutet also, dass ein Winkel zwischen Längsachse der Karosserie und dem Untergrund aus dem Verfahren zur Neigungsbestimmung resultiert.

Eine Weiterbildung der Erfindung sieht vor, dass die bestimmte Neigung für eine Winkeleinstellung eines Leuchtmittels, insbesondere eines Scheinwerfers, verwendet wird. Das heißt, dass die Winkeleinstellung des Leuchtmittels in Abhängigkeit von der bestimmten Neigung eingestellt wird. Besonders bevorzugt wird dies bei einem Scheinwerfer beziehungsweise einem Frontscheinwerfer des Kraftfahrzeugs durchgeführt. Die Winkeleinstellung kann grundsätzlich um alle Achsen des Kraftfahrzeugs erfolgen.

Eine Weiterbildung der Erfindung sieht vor, dass die Winkeleinstellung des Leuchtmittels in Bezug auf die Querachse der Karosserie erfolgt. Das bedeutet, dass ein Winkel zwischen Strahlrichtung des Leuchtmittels und dem Untergrund angepasst wird. Bevorzugt wird der Winkel konstant gehalten, um eine gleichbleibende Leuchtweite des Leuchtmittels zu realisieren. Dies kann im Rahmen einer Leuchtweitenregulierung geschehen. Insbesondere wird ein Winkel zwischen Strahlrichtung des Leuchtmittels und dem Untergrund über verschiedene Fahrzustände des Kraftfahrzeugs hinweg konstant gehalten.

Eine Weiterbildung der Erfindung sieht vor, dass die bestimmte Neigung für eine Ausrichtung einer Kamera, insbesondere eines Spurhaltesystems und/oder Hinderniswarnsystems, verwendet wird. Bei der Verwendung einer Kamera, insbesondere der Kamera eines Spurhaltesystems und/oder Hinderniswarnsystems, ist es sinnvoll, diese in Abhängigkeit der Neigung der Karosserie auszurichten, sodass ein Erfassungsbereich der Kamera im Wesentlichen gleich bleibt. Daher erfolgt eine Ausrichtung der Kamera entsprechend der bestimmten Neigung, insbesondere in Bezug auf die Querachse der Karosserie.

Eine Weiterbildung der Erfindung sieht vor, dass die bestimmte Neigung für eine Ausrichtung einer Radarsensorik, insbesondere einer Abstandswarneinrichtung, verwendet wird. Um Messfehler der Radarsensorik zu vermeiden, also möglichst zuverlässig Hindernisse in der Umgebung des Kraftfahrzeugs, insbesondere andere Kraftfahrzeuge, erfassen zu können, ist es sinnvoll, die Radarsensorik entsprechend der bestimmten Neigung auszurichten. Damit kann eine optimale Erfassungsleistung erreicht werden. Insbesondere soll durch die Ausrichtung der Radarsensorik erreicht werden, dass von der Radarsensorik ausgesandte Radarstrahlen in einem gleichbleibenden Winkel zu dem Untergrund des Kraftfahrzeugs verlaufen, insbesondere parallel dazu. Dieses Verfahren kann vorteilhaft bei einer Abstandswarneinrichtung eingesetzt werden. Hier ist es von Bedeutung, beispielsweise ein vorausfahrendes Kraftfahrzeug zuverlässig und in möglichst großer Entfernung zu dem Kraftfahrzeug zu erfassen. Durch die Ausrichtung der Radarsensorik anhand der bestimmten Neigung kann eine im Wesentlichen gleichbleibende Erfassungsgüte der Radarsensorik gewährleistet sein.

Die Erfindung umfasst weiterhin eine Vorrichtung mit den Merkmalen des Anspruchs 8 zur Neigungsbestimmung einer Karosserie eines Kraftfahrzeugs, insbesondere zur Durchführung des Verfahrens gemäß den vorstehenden Ausführungen, wobei das Kraftfahrzeug seinen Rädern zugeordnete Radsensoren aufweist. Es ist vorgesehen, dass eine Inertialsensorik zur Bestimmung von Beschleunigung und/oder Drehrate einer Karosserie des Kraftfahrzeugs vorgesehen ist, und dass aus von den Radsensoren gemessenen Werten und der Beschleunigung und/oder der Drehrate eine Neigung der Karosserie in Bezug zu einem mit den Rädern des Kraftfahrzeugs in Kontakt stehenden Untergrund bestimmbar ist. Es ist vorgesehen, dass die Vorrichtung zur Neigungsbestimmung ein Steuergerät aufweist, welchem die von den Radsensoren gemessenen Werte und die Beschleunigung und/oder die Drehrate als Eingangsgrößen zugeführt sind. Das Steuergerät bestimmt aus diesen Werten die Neigung der Karosserie in Bezug zu dem Untergrund. Die bestimmte Neigung kann anschließend als Ausgangssignal des Steuergeräts zur Verfügung gestellt werden. Es kann auch vorgesehen sein, dass das Steuergerät beispielsweise die Winkeleinstellung des Leuchtmittels, die Ausrichtung der Kamera und/oder die Ausrichtung der Radarsensorik direkt vornimmt. Alternativ ist es vorgesehen, dass die vorstehend dem Steuergerät zugeschriebene Funktionalität in ein bereits an dem Kraftfahrzeug vorgesehenes Steuergerät integriert wird.

### Kurze Beschreibung der Zeichnungen

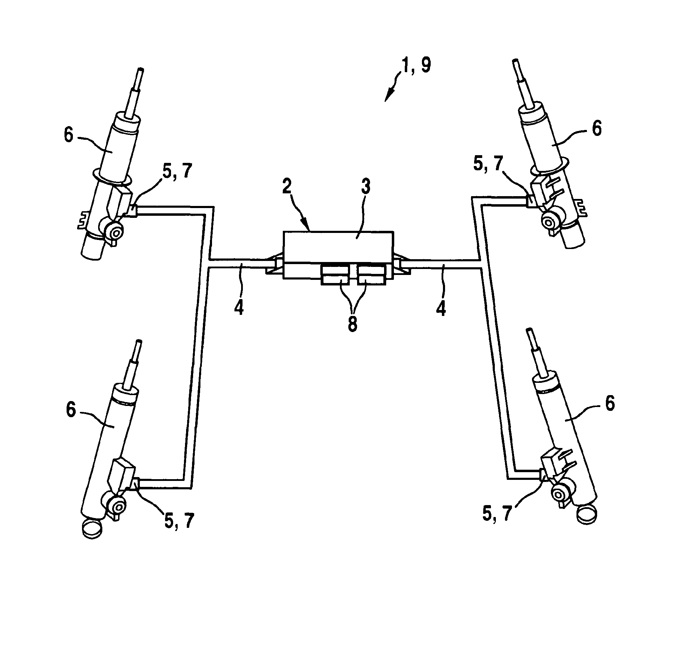

Die Erfindung wird im Folgenden anhand des in der Zeichnung dargestellten Ausführungsbeispiels näher erläutert, ohne dass eine Beschränkung der Erfindung erfolgt. Es zeigt die einzige
- Figur: eine Sensoranordnung mit einer Inertialsensorik und Rädern eines Kraftfahrzeugs zugeordneten Radsensoren.

### Ausführungsform(en) der Erfindung

Die Figur zeigt eine Sensoranordnung 1, die an einem nicht dargestellten Kraftfahrzeug vorgesehen ist. Die Sensoranordnung umfasst ein Steuergerät 2, in welchem eine Inertialsensorik 3 angeordnet ist. An das Steuergerät 2 sind weiterhin über Anschlussleitungen 4 Radsensoren 5 angeschlossen. Diese sind an Dämpfern 6 angeordnet, die sich zwischen nicht dargestellten Rädern des Kraftfahrzeugs und einer ebenfalls nicht dargestellten Karosserie beziehungsweise eines Fahrgestells des Kraftfahrzeugs befinden. Die Dämpfer 6 dienen zur Aufnahme von Stößen, die beispielsweise von einem mit den Rädern des Kraftfahrzeugs in Kontakt stehenden Untergrund auf diese ausgeübt wird. Damit werden die Stöße nicht beziehungsweise in einem geringeren Ausmaß an die Karosserie beziehungsweise das Fahrgestell des Kraftfahrzeugs weitergeleitet. Zur Aufnahme der Stöße weisen die Dämpfer eine variable Länge auf, das heißt, der Abstand zwischen den Rädern des Kraftfahrzeugs und der Karosserie kann in einem bestimmten Bereich variiert werden. Die Radsensoren 5 sind dazu vorgesehen, diesen Abstand zu bestimmen. Zu diesem Zweck sind sie in dem dargestellten Beispiel als Dämpferbeschleunigungssensoren 7 ausgebildet. Das bedeutet, dass sie eine Beschleunigung des dem Rad zugeordneten Teils des Dämpfers erfassen und an das Steuergerät 2 über die Anschlussleitungen 4 weiterleiten. Das Steuergerät 2 ermittelt beispielsweise aus der Radbeschleunigung eine Radauslenkung. Mittels der Inertialsensorik 3 sind Beschleunigung und/oder Drehrate der Karosserie bestimmbar. Beispielsweise können Beschleunigung und Drehraten für alle drei Raumrichtungen bestimmt werden. Aus Beschleunigung, Drehrate und Radbeschleunigung und/oder Radauslenkung kann durch das Steuergerät 2 eine Neigung der Karosserie in Bezug zu einem mit den Rädern des Kraftfahrzeugs in Kontakt stehenden Untergrund bestimmt werden. Das Steuergerät 2 verfügt über weitere Anschlüsse 8, über welche beispielsweise die bestimmte Neigung an weitere, nicht dargestellte Geräte weitergeleitet wird. Das bedeutet, dass auch weiteren Geräten die bestimmte Neigung zur weiteren Verarbeitung zur Verfügung steht. Es kann alternativ auch vorgesehen sein, dass das Steuergerät eine Ansteuerung von weiteren, nicht dargestellten Vorrichtungen ausführt.

Diese weiteren Vorrichtungen können beispielsweise ein Leuchtmittel, insbesondere ein Scheinwerfer, eine Kamera und/oder eine Radarsensorik sein, die aufgrund der bestimmten Neigung ausgerichtet werden. Die Sensoranordnung 1 ist also Teil einer Vorrichtung 9 zur Neigungsbestimmung der Karosserie des Kraftfahrzeugs.

## Patentansprüche

1. Verfahren zur Neigungsbestimmung einer Karosserie eines Kraftfahrzeugs, wobei das Kraftfahrzeug seinen Rädern zugeordnete Radsensoren (5) aufweist, und wobei eine Inertialssensorik (3) zur Bestimmung von Beschleunigung und/oder Drehrate einer Karosserie des Kraftfahrzeugs vorgesehen ist, **dadurch gekennzeichnet, dass** die Inertialsensorik (3) Beschleunigungen aₓ, a_{y}, a_{z} und Drehraten ωₓ, ω_{y}, ω_{z} für alle drei Raumrichtungen bestimmt, und dass aus von den Radsensoren (5) gemessenen Werten und der Beschleunigung und/oder der Drehrate eine Neigung der Karosserie in Bezug zu einem mit den Rädern des Kraftfahrzeugs in Kontakt stehenden Untergrund bestimmt wird, wobei mittels der Radsensoren (5) eine Radbeschleunigung in Richtung der Hochachse des Kraftfahrzeugs erfasst wird.

2. Verfahren nach Anspruch 1, **dadurch gekennzeichnet, dass** die Inertialsensorik (3) zumindest fünf der Größen aₓ, a_{y}, a_{z}, jeweils der Beschleunigung, und ωₓ, ω_{y}, ω_{z}, jeweils der Drehrate, bestimmt, wobei eine verbleibende Größe mittels eines Modells aus den bestimmten Größen und/oder zumindest einem der Werte der Radsensoren berechnet wird.

3. Verfahren nach einem oder mehreren der vorhergehenden Ansprüche, **dadurch gekennzeichnet, dass** die Neigung um eine Querachse der Karosserie bestimmt wird.

4. Verfahren nach einem oder mehreren der vorhergehenden Ansprüche, **dadurch gekennzeichnet, dass** die bestimmte Neigung für eine Winkeleinstellung eines Leuchtmittels, insbesondere eines Scheinwerfers, verwendet wird.

5. Verfahren nach einem oder mehreren der vorhergehenden Ansprüche, **dadurch gekennzeichnet, dass** die Winkeleinstellung des Leuchtmittels in Bezug auf die Querachse der Karosserie erfolgt.

6. Verfahren nach einem oder mehreren der vorhergehenden Ansprüche, **dadurch gekennzeichnet, dass** die bestimmte Neigung für eine Ausrichtung einer Kamera, insbesondere eines Spurhaltesystems und/oder Hinderniswarnsystems verwendet wird.

7. Verfahren nach einem oder mehreren der vorhergehenden Ansprüche, **dadurch gekennzeichnet, dass** die bestimmte Neigung für eine Ausrichtung einer Radarsensorik, insbesondere einer Abstandswarneinrichtung, verwendet wird.

8. Vorrichtung (9) zur Neigungsbestimmung einer Karosserie eines Kraftfahrzeugs, insbesondere zur Durchführung des Verfahrens nach einem oder mehreren der vorhergehenden Ansprüche, wobei das Kraftfahrzeug seinen Rädern zugeordnete Radsensoren (5) aufweist, und wobei eine Inertialsensorik (3) zur Bestimmung von Beschleunigung und/oder Drehrate einer Karosserie des Kraftfahrzeugs vorgesehen ist, **dadurch gekennzeichnet, dass** die Inertialsensorik (3) Beschleunigung aₓ, a_{y}, a_{z} und Drehrate ωₓ, ω_{y}, ω_{z} für alle drei Raumrichtungen bestimmt, und dass ein Steuergerät (2) der Vorrichtung (9) aus von den Radsensoren (5) gemessenen Werten und der Beschleunigung und/oder der Drehrate eine Neigung der Karosserie in Bezug zu einem mit den Rädern des Kraftfahrzeugs in Kontakt stehenden Untergrund bestimmt, wobei mittels der Radsensoren (5) eine Radbeschleunigung in Richtung einer Hochachse des Kraftfahrzeugs erfasst wird.

## Claims

1. Method for determining the inclination of a bodywork of a motor vehicle, wherein the motor vehicle has wheel sensors (5) assigned to its wheels, and wherein an inertial sensor system (3) is provided for determining the acceleration and/or rotational speed of a bodywork of the motor vehicle, **characterized in that** the inertial sensor system (3) determines accelerations aₓ, a_{y}, a_{z} and rotational speeds ωₓ, ω_{y} and ω_{z} for all three spatial directions, and **in that** the inclination of the bodywork with respect to an underlying surface which is in contact with the wheels of the motor vehicle is determined from values measured by the wheel sensors (5), and the acceleration and/or the rotational speed, wherein a wheel acceleration in the direction of the vertical axis of the motor vehicle is detected by means of the wheel sensors (5).

2. Method according to Claim 1, **characterized in that** the inertial sensor system (3) determines at least five of the variables aₓ, a_{y}, a_{z}, in each case of the acceleration, and ωₓ, ω_{y} and ω_{z}, in each case of the rotational speed, wherein a remaining variable is calculated, by means of a model, from the determined variables and/or at least one of the values of the wheel sensors.

3. Method according to one or more of the preceding claims, **characterized in that** the inclination is determined about a transverse axis of the bodywork.

4. Method according to one or more of the preceding claims, **characterized in that** the determined inclination is used for an angular setting of a lighting means, in particular of a headlight.

5. Method according to one or more of the preceding claims, **characterized in that** the angular setting of the lighting means is carried out with respect to the transverse axis of the bodywork.

6. Method according to one or more of the preceding claims, **characterized in that** the determined inclination is used for orientation of a camera, in particular of a lane-keeping system and/or obstacle-warning system.

7. Method according to one or more of the preceding claims, **characterized in that** the determined inclination is used for orientation of a radar sensor system, in particular of a distance-warning device.

8. Device (9) for determining the inclination of a bodywork of a motor vehicle, in particular for carrying out the method as claimed in one or more of the preceding claims, wherein the motor vehicle has wheel sensors (5) assigned to its wheels, and wherein an inertial sensor system (3) is provided for determining the acceleration and/or rotational speed of a bodywork of the motor vehicle, **characterized in that** the inertial sensor system (3) determines the acceleration aₓ, a_{y}, a_{z} and rotational speed ωₓ, ω_{y} and ω_{z} for all three spatial directions, and **in that** a control unit (2) of the device (9) determines the inclination of the bodywork with respect to an underlying surface which is in contact with the wheels of the motor vehicle from values measured by the wheel sensors (5), and the acceleration and/or the rotational speed, wherein a wheel acceleration in the direction of a vertical axis of the motor vehicle is detected by means of the wheel sensors (5).

## Revendications

1. Procédé de détermination de l'inclinaison du châssis d'un véhicule automobile, le véhicule automobile présentant des détecteurs de roue (5) associés à ses roues, un ensemble (3) de détecteurs inertiels étant prévu pour déterminer l'accélération et/ou la vitesse de rotation du châssis du véhicule automobile,
**caractérisé en ce que**
l'ensemble (3) de détecteurs inertiels détermine les accélérations aₓ, a_{y}, a_{z} et les vitesses de rotation ωₓ, ω_{y}, ω_{z} dans les trois directions spatiales et
**en ce que** l'inclinaison du châssis par rapport au sol en contact avec les roues du véhicule automobile est déterminée à partir des valeurs mesurées par les détecteurs de roue (5), de l'accélération et/ou de la vitesse de rotation,
l'accélération des roues dans la direction de l'axe principal du véhicule automobile étant détectée au moyen des détecteurs de roue (5).

2. Procédé selon la revendication 1, **caractérisé en ce que** l'ensemble (3) de détecteurs inertiels détermine cinq des grandeurs aₓ, a_{y}, a_{z} de l'accélération et ωₓ, ω_{y}, ω_{z} de la vitesse de rotation, la grandeur restante étant calculée au moyen d'un modèle à partir des grandeurs déterminées et/ou d'au moins une des valeurs des détecteurs de roue.

3. Procédé selon l'une ou plusieurs des revendications précédentes, **caractérisé en ce que** l'inclinaison déterminée est celle par rapport à un axe transversal du châssis.

4. Procédé selon l'une ou plusieurs des revendications précédentes, **caractérisé en ce que** l'inclinaison déterminée est utilisée pour ajuster l'angle d'un moyen d'éclairage et en particulier d'un phare.

5. Procédé selon l'une ou plusieurs des revendications précédentes, **caractérisé en ce que** l'ajustement de l'angle du moyen d'éclairage s'effectue par rapport à l'axe transversal de la carrosserie.

6. Procédé selon l'une ou plusieurs des revendications précédentes, **caractérisé en ce que** l'inclinaison déterminée est utilisée pour orienter une caméra, en particulier celle d'un système de suivi de la bande de circulation et/ou d'un système d'avertissement de la présence d'obstacles.

7. Procédé selon l'une ou plusieurs des revendications précédentes, **caractérisé en ce que** l'inclinaison déterminée est utilisée pour l'orientation d'un ensemble de détecteurs radar et en particulier d'un dispositif d'avertissement de distance.

8. Système (9) de détermination de l'inclinaison du châssis d'un véhicule automobile, en particulier en vue de l'exécution d'un procédé selon l'une ou plusieurs des revendications précédentes, le véhicule automobile présentant des détecteurs de roue (5) associés à ses roues, un ensemble (3) de détecteurs inertiels étant prévu pour déterminer l'accélération et/ou la vitesse de rotation du châssis du véhicule automobile, **caractérisé en ce que**
l'ensemble (3) de détecteurs inertiels détermine les accélérations aₓ, a_{y}, a_{z} et les vitesses de rotation wiₓ, w_{y}, w_{z} dans les trois directions spatiales et
**en ce qu'**un appareil de commande (2) du système (9) détermine à partir des valeurs mesurées par les détecteurs de roues (5), de l'accélération et/ou de la vitesse de rotation l'inclinaison de la carrosserie par rapport au sol en contact avec les roues du véhicule automobile,
l'accélération des roues dans la direction de l'axe principal du véhicule automobile étant détectée au moyen des détecteurs de roue (5).
